# FASCICULE DE BREVET EUROPEEN

(11) **EP 2 809 601 B1**
(45) Date de publication et mention de la délivrance du brevet: **06.04.2016**
(21) Numéro de dépôt: 13703994.7
(22) Date de dépôt: 29.01.2013
(51) Int. Cl.: B65H 33/12, B65H 43/04, B65H 33/14

(54) **PROCEDE DE PRELEVEMENT D'ECHANTILLONS DANS UNE MACHINE DE CONDITIONNEMENT D'OBJETS PLATS ET MACHINE DE CONDITIONNEMENT POUR LA MISE EN OEUVRE D'UN TEL PROCEDE**
VERFAHREN ZUR PROBENENTNAHME IN EINER VERPACKUNGSMASCHINE FÜR FLACHE GEGENSTÄNDE, UND VERPACKUNGSMASCHINE FÜR DIE UMSETZUNG DIESES VERFAHRENS
METHOD FOR COLLECTING SAMPLES IN A MACHINE FOR PACKAGING FLAT OBJECTS AND PACKAGING MACHINE FOR IMPLEMENTING SUCH A METHOD

(30) Priorité: 03.02.2012 EP 12000737
(43) Date de publication de la demande: 10.12.2014
(73) Titulaire: BOBST MEX SA, 1031 Mex (CH)
(72) Inventeur: BRIZZI, Nicolas, CH-1920 Martigny (CH)
(86) Numéro de dépôt international: PCT/EP2013/000248
(87) Numéro de publication internationale: WO 2013/113488

(56) Documents cités:
- EP-A1- 1 541 512
- EP-A2- 1 215 150
- JP-A- 49 105 606
- US-A- 4 367 997
- US-A- 4 838 747
- US-A1- 2006 263 196

## Description

La présente invention concerne un procédé permettant de prélever des échantillons au sein d'une machine chargée de conditionner des objets plats.

L'invention est également relative à une machine de conditionnement d'objets plats à même de mettre en ouvre ledit procédé de prélèvement d'échantillons.

L'invention trouve une application particulièrement avantageuse, mais non exclusive, dans le domaine de la fabrication des boîtes pliantes réalisées en carton ondulé ou en carton compact à fort grammage.

Dans l'industrie de l'emballage, la fabrication des boîtes pliantes s'effectue traditionnellement en ligne, en pliant et en collant des découpes au moyen d'une plieuse-colleuse. Comme les boîtes pliantes sont délivrées au final sous forme de nappe, elles sont généralement conditionnées en paquets directement à la sortie de la plieuse-colleuse. Le plus souvent, les paquets subissent en outre un cerclage individuel afin de garantir leur stabilité, et ainsi faciliter leur manutention et/ou leur stockage.

Pour réaliser de telles opérations d'empaquetage, il est connu d'utiliser un type particulier de machine de conditionnement, à savoir une machine d'empaquetage. Cette dernière est en effet en mesure non seulement de mettre les boîtes pliantes en paquets, mais aussi de lier ensemble les boîtes pliantes composant chaque paquet.

Parmi les machines d'empaquetage connues de l'état de la technique, on distingue celles qui opèrent schématiquement en trois temps. En premier lieu, la machine commence par compter les boîtes une à une, de manière à pouvoir les séparer régulièrement dès qu'un nombre bien déterminé est atteint, et ainsi créer une succession de lots de boîtes. Ensuite, la machine procède à une mise en paquets qui consiste à empiler de façon plus ou moins complexe un nombre réduit de lots, en général deux. Enfin, l'empaquetage se termine par le cerclage, opération au cours de laquelle les boîtes composant chaque paquet sont attachées ensemble par l'intermédiaire d'un ou plusieurs liens. Les paquets cerclés sont alors en mesure d'être aisément palettisés en vue de leur manutention et/ou de leur stockage.

L'association d'une plieuse-colleuse et d'une machine d'empaquetage présente toutefois l'inconvénient de n'être guère compatible avec la réalisation d'un contrôle qualité, notamment dès lors que ce dernier doit s'opérer sur des produits finis. En effet, l'imbrication entre ces deux types de machines est telle qu'il n'y a finalement qu'à la sortie de la machine d'empaquetage que des échantillons de produits finis peuvent être aisément prélevés. Malheureusement, une telle action requiert l'intervention d'un opérateur qui doit intervenir manuellement pour prélever un paquet, puis rompre chaque lien attachant les boîtes ensemble, avant d'extraire un ou plusieurs échantillons de l'empilement. Mais ensuite, cela contraint aussi l'opérateur à recycler le paquet entamé, en le complétant, avant de le cercler à nouveau, puis de le remettre en circulation.

Le document US 4'838'747 décrit un dispositif de transfert et de mise en paquets d'objets plats notamment pour former des lots de boîtes pliées comptées sortant en nappe d'une machine les travaillant comprenant des moyens de propulsion rapide, des moyens d'emmagasinage et des moyens d'évacuation.

Aussi, le problème technique à résoudre par l'objet de la présente invention, est de proposer un procédé de prélèvement d'échantillons dans une machine de conditionnement d'objets plats, ladite machine de conditionnement comprenant des moyens de comptage et de séparation pour former une succession de lots composés chacun d'un nombre donné d'objets plats, ainsi que des moyens d'assemblage pour former une succession de paquets constitués chacun d'un assemblage déterminé de lots, procédé qui permettrait d'éviter les problèmes de l'état de la technique en offrant notamment une réelle facilité de mise en oeuvre.

La solution au problème technique posé consiste, selon la présente invention, en ce que le procédé de prélèvement comporte les étapes consistant à :
- former un lot échantillon composé d'un nombre donné d'objets plats à l'aide des moyens de comptage et de séparation,
- prélever le lot échantillon par l'intermédiaire des moyens d'assemblage,
- transférer le lot échantillon avec les moyens d'assemblage jusqu'à une zone de récupération dédiée.

L'invention telle qu'ainsi définie présente l'avantage de pouvoir réaliser un prélèvement automatisé de produits finis au sein de la machine de conditionnement, sans pour autant perturber le processus de conditionnement proprement dit. L'automatisation permet de s'affranchir de fastidieuses opérations manuelles. Mais elle confère également précision, rapidité et fiabilité à l'opération de prélèvement.

Le principe de l'invention consiste donc à prélever les échantillons en utilisant certains des principaux composants de la machine de conditionnement, à savoir les moyens de comptage et séparation pour isoler chaque échantillon, ainsi que les moyens d'assemblage pour extraire ledit échantillon puis le transférer à un endroit approprié. Une telle manière de prélever ne requiert donc pas l'emploi de moyens spécifiques, mais nécessite simplement une utilisation différente de la machine de conditionnement. Cela rend l'invention d'autant plus facile à mettre en oeuvre.

L'invention s'applique à toute machine de conditionnement capable de mettre en paquets des objets plats, en procédant par comptage et séparation en lots desdits objets plats, puis par constitution et assemblage des lots d'objets plats. Cela signifie que l'invention concerne également toute machine de conditionnement susceptible d'opérer une ou plusieurs autres opérations supplémentaires, notamment après la mise en parquet. On pense plus particulièrement à une empaqueteuse dans lequel les paquets sont cerclés/ficelés/banderolés juste après leur constitution, comme dans l'exemple de réalisation qui va être décrit plus tard pour illustrer l'invention. Mais on pense aussi aux machines dans lesquelles les paquets sont amenés au final à être filmés et/ou à être rangés dans un quelconque container.

Selon une particularité de l'invention, la machine de conditionnement étant destinée à fonctionner directement en aval de la machine chargée de fabriquer les objets plats, le procédé de prélèvement comporte en outre les étapes consistant à :
- préalablement à l'étape de formation du lot échantillon, à réduire la vitesse de fonctionnement de la machine de fabrication des objets plats,
- postérieurement à l'étape de prélèvement du lot échantillon, à augmenter la vitesse de ladite machine de fabrication pour revenir à sa vitesse de fonctionnement initiale.

On sait que quand une machine de conditionnement est directement associée à une machine de fabrication, elle constitue l'élément limitatif du système en terme de vitesse de fonctionnement. C'est notamment le cas lorsqu'une machine de conditionnement est utilisée pour conditionner des objets plats de type boîtes pliantes en provenance d'une plieuse-colleuse. On comprend bien dès lors qu'il s'avère particulièrement pertinent de ralentir la machine de fabrication lorsque la machine de conditionnement doit être momentanément utilisée pour faire autre chose que du conditionnement, à savoir du prélèvement. Bien entendu, cela implique que la machine de fabrication doit ensuite être accélérée pour revenir à sa vitesse de fonctionnement normale. Une telle opération peut s'effectuer concomitamment ou ultérieurement, soit à l'étape de transfert du lot échantillon, soit à l'étape de dépose dudit lot échantillon.

Il est entendu que le procédé de prélèvement objet de l'invention est avant tout destiné à faire de l'échantillonnage en vue d'appliquer un processus de contrôle qualité ; chaque lot échantillon pouvant être composé d'un ou plusieurs objets. Dans cette hypothèse, le prélèvement pourra intervenir indifféremment de manière régulière, c'est-à-dire tous les x objets, tout comme il pourra être effectué aléatoirement ou être déclenché uniquement sur demande express.

Il est cependant important de préciser que le procédé de prélèvement selon l'invention peut également être avantageusement utilisé pour faire de l'éjection de gâche, dans le cadre d'un processus de détection et d'élimination d'objets non-conformes. Dans ce cas là, le prélèvement n'interviendra qu'en cas de non-conformité et bien sûr uniquement sur des objets identifiés comme étant non-conformes.

D'ailleurs, et selon une autre particularité de l'invention, le procédé de prélèvement comporte en outre les étapes consistant à :
- détecter tout objet plat non-conforme, en amont de la machine de conditionnement,
- marquer chaque objet plat non-conforme,
- repérer chaque objet plat marqué à l'entrée de la machine de conditionnement,
- prélever sous forme de lot échantillon chaque objet plat marqué.

Cette caractéristique concerne donc une application particulière de l'invention, à savoir l'éjection de gâche. Le principe consiste ici à mettre en oeuvre le procédé de prélèvement selon l'invention, pour extraire et évacuer tout objet non-conforme qui est détecté en amont de la machine de conditionnement. A cet égard, il est à noter que l'opération de détection peut être menée indifféremment avant ou après que la fabrication de l'objet plat ne soit achevée.

Dans le cas où les objets plats sont des boîtes pliantes en provenance d'une plieuse-colleuse, la détection s'opérera de préférence au niveau des découpes lorsque ces dernières ne sont pas encore pliées et collées, afin de pouvoir contrôler d'un seul coup l'intégralité de la surface extérieure de chaque boîte. Les causes de non-conformité seront généralement un manque de colle, une qualité d'impression insuffisante, ou une erreur de pliage. La détection et le marquage seront avantageusement réalisées directement au niveau de la plieuse-colleuse.

En pratique, la détection pourra être menée en utilisant un capteur adapté à chaque type de défaut recherché. Le marquage pourra quant à lui s'effectuer en pulvérisant sur chaque boîte non-conforme, une substance liquide qui n'est visible qu'à la lumière UV. Le repérage de chaque boîte non-conforme préalablement marqué pourra pour sa part s'effectuer dès son entrée dans la machine de conditionnement. Enfin, grâce à la mise en oeuvre de l'invention, l'éjection de chaque boîte marquée pourra être réalisée par simple prélèvement, c'est-à-dire sans perturber le processus de conditionnement, ni endommager l'échantillon.

Toujours dans l'hypothèse d'une mise en oeuvre du procédé de prélèvement conforme à l'invention pour faire de l'éjection de gâche, si l'étape de détection conduit à détecter plusieurs objets plats non-conformes consécutifs, l'étape de prélèvement consistera avantageusement à prélever en une seule fois tous lesdits objets plats non-conformes dans un même lot échantillon.

Bien entendu, l'invention concerne plus généralement toute machine de conditionnement capable de mettre en oeuvre le procédé de prélèvement précédemment décrit.

La présente invention concerne en outre les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. La description est par ailleurs donnée en référence aux dessins annexés dans lesquels:
La figure 1 représente une machine d'empaquetage d'objets plats qui est composée d'un module de comptage et de séparation, d'un module d'assemblage et d'un module de cerclage, et qui est en mesure de mettre en oeuvre le procédé de prélèvement d'échantillons conforme à l'invention.
La figure 2 illustre de façon extrêmement schématique le fonctionnement du module de comptage et de séparation qui équipe la machine d'empaquetage de la figure 1.
La figure 3 est une vue en perspective de dessus qui montre l'interaction entre le module d'assemblage et le module de comptage et de séparation, à la fin du processus de prélèvement d'un échantillon.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

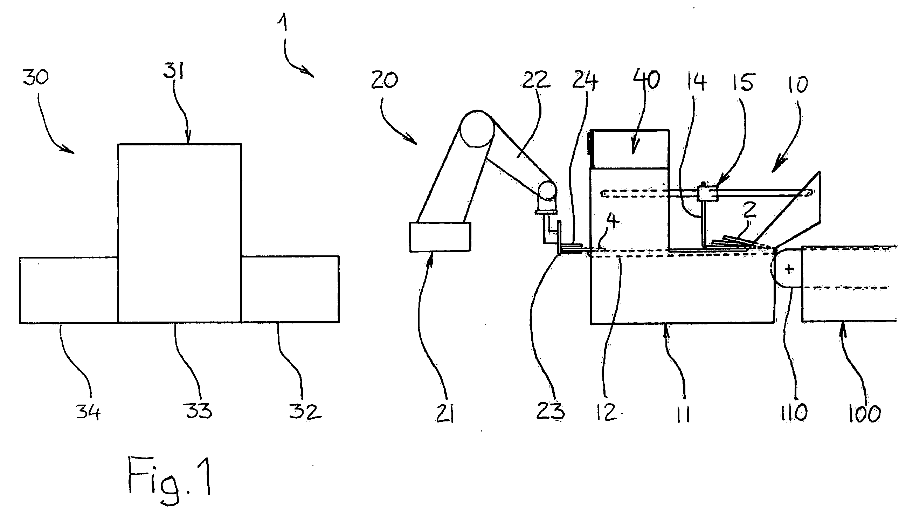

La figure 1 illustre une machine 1 chargée d'empaqueter des objets plats 2 de type boîtes pliantes. Cette machine de conditionnement 1 est en effet conçue pour transformer un flux continu de boîtes pliantes 2 issu d'une plieuse-colleuse 100, en une succession de paquets cerclés prêts à être manipulés et/ou stockés. Placée directement en aval de la plieuse-colleuse 100, la machine de conditionnement 1 présente une structure modulaire dans laquelle des moyens de comptage et de séparation 10, des moyens d'assemblage 20 et des moyens de cerclage 30 sont respectivement agencés sous formes de modules interdépendants 11, 21, 31.

Le module de comptage et de séparation 11 est plus particulièrement chargé de former une succession de lots 4, 5 composés chacun d'un nombre donné de boîtes 2. Concrètement, cela consiste à compter les boîtes 2 une à une et à les séparer régulièrement en séries dès qu'un nombre d'exemplaires bien déterminé est atteint, constituant ainsi une suite de lots de boîtes 4, 5 disjoints les uns des autres.

Le module d'assemblage 21 est quant à lui voué à la création d'une succession de paquets constitués chacun d'un empilement déterminé de lots de boîtes 4, 5. Un tel résultat est obtenu ici en prélevant individuellement chaque lot de boîtes 4, 5 à la sortie du module de comptage et de séparation 11, en le transférant jusqu'à l'entrée du module de cerclage 31, et en l'empilant de façon plus ou moins complexe avec un nombre réduit de ses homologues en vue de former un paquet.

Le module de cerclage 31, dont la présence provient du fait que la machine de conditionnement 1 est plus précisément une machine d'empaquetage, est pour sa part destiné à former une succession de paquets cerclés dans chacun desquels les boîtes empilées 2 sont attachés ensemble. En pratique, le cerclage de chaque paquet peut s'opérer au moyen d'un ou plusieurs liens dont la nature et le positionnement peuvent être choisis de manière quelconque.

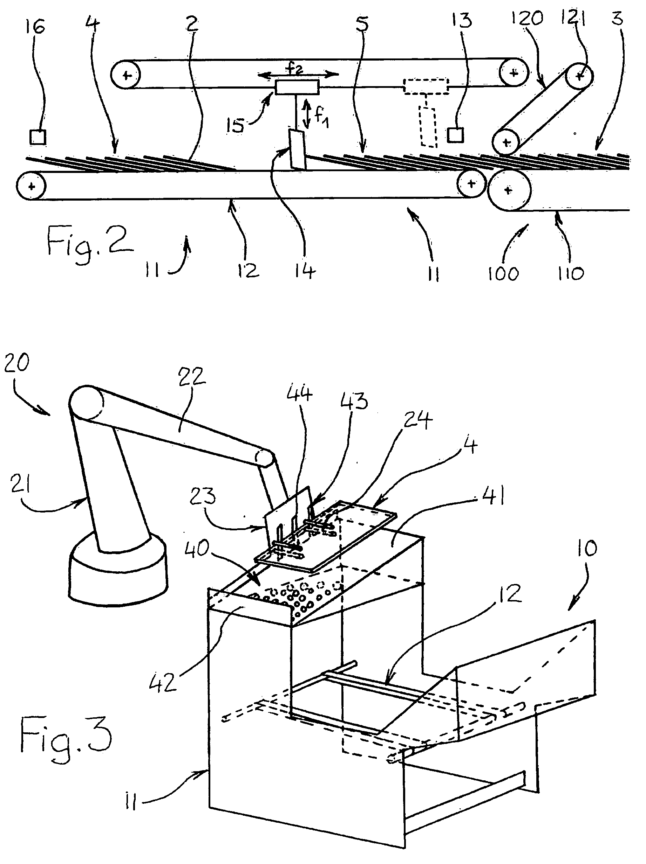

Dans cet exemple de réalisation, choisi uniquement à titre d'exemple, le module de comptage et de séparation 11 présente une structure relativement classique. Sa cinématique de fonctionnement est illustré à la figure 2.

Cette représentation extrêmement schématique montre tout d'abord que le module 11 est alimenté directement par la plieuse-colleuse 100. Les boîtes pliantes 2 sont en effet acheminées sous forme de nappe 3 jusqu'à l'entrée du module de comptage et de séparation 11, par le tapis de réception 110 de la plieuse-colleuse 100 qui tourne à une vitesse donnée v1.

Un tapis supérieur 120, tournant lui aussi à vitesse v1, est implanté au dessus de l'extrémité aval du tapis de réception 110. Monté pivotant par rapport à un axe transversal 121 et entraîné continuellement en basculement vers le bas par gravité, ce tapis supérieur 120 coopère avec le tapis de réception 110 afin de canaliser la nappe 3 à la sortie de la plieuse-colleuse 100, en homogénéisant le positionnement relatif des différentes boîtes 2 qui la composent.

Lorsque les boîtes 2 arrivent à l'entrée du module de comptage et de séparation 11, leur convoyage est pris en charge par un tapis de transport inférieur 12 qui roule à vitesse v1 à ce moment là. Une cellule laser 13 placée juste au dessus de la nappe, procède alors au comptage des boîtes 2 au fur et à mesure que ces dernières défilent à vitesse v1, ceci en vue de constituer un lot 4, 5.

Légèrement en aval de la cellule laser 13, on trouve un séparateur 14 dont la fonction est de diviser la nappe 3 en une succession de lots 4, 5. Pour cela, le séparateur 14 est tout d'abord monté mobile en translation verticale (flèche f1) de manière à pouvoir descendre vers la nappe 3, jusqu'à venir s'intercaler entre la dernière boîte du lot 4 dont le comptage est déjà achevé, et la première boîte du nouveau lot 5 en cours de comptage. Mais le séparateur 14 est également monté mobile en translation horizontale (flèche f2) parallèlement à la direction de déplacement des boîtes 2, afin de pouvoir d'une part accompagner le déplacement du lot 5 en cours de comptage, et d'autre part retenir ledit lot 5 lors de l'évacuation du lot précédent 4.

Concrètement, le séparateur 14 est couplé à un système d'entraînement 15 qui est paramétré pour le faire avancer à vitesse v1 durant tout le temps de comptage du nouveau lot 5. Le séparateur 14 est ainsi en mesure de retenir le lot 5 au cas où le défilement du tapis de transport 12 viendrait à s'accélérer. L'évacuation du lot complet 4 s'opère en effet en augmentant momentanément la vitesse du tapis de transport 12 jusqu'à une vitesse v2 qui est significativement supérieure à v1. Le séparateur 14, toujours présent devant le lot 5 en cours de comptage, joue alors le rôle d'une butée mobile qui permet de maintenir ledit lot 5 à vitesse v1 malgré le fait que ce dernier repose sur un tapis 12 tournant à vitesse v2.

Un capteur 16 est implanté au dessus de la sortie du tapis de transport 12 pour détecter la fin de passage du lot complet 4. Une fois l'évacuation confirmée, le tapis de transport 12 repasse à vitesse v1. Concomitamment, le système d'entraînement 15 est mis à contribution pour relever le séparateur 14, le ramener rapidement à sa position initiale, et le redescendre jusqu'à ce qu'il vienne s'intercaler entre les deux prochains lots 4, 5 à séparer.

Ainsi qu'on peut le voir clairement sur les figures 1 et 3, pour manipuler chaque lot de boîtes 2, le module d'assemblage 21 utilise un bras robotisé 22 à l'extrémité libre duquel est articulé un préhenseur à fourches 23.

Que les boîtes 2 sortant du module de comptage et de séparation 11 constitue un lot standard destiné à être empaqueté, ou un lot échantillon voué à être isolé en vue d'être contrôlé, elles sont prélevées en positionnant le préhenseur 23 directement à la sortie du tapis de transport 12, conformément à la figure 1. Concrètement, toutes les boîtes 2 composant le lot 4 viennent s'accumuler entre les fourches 24 du préhenseur 23, en s'empilant verticalement l'une après l'autre au fur et à mesure que ledit préhenseur 23 s'abaisse.

Une fois les boîtes 2 intégralement saisies par le préhenseur à fourches 23, la destination du lot 4, 5 varie en fonction de sa nature. En effet, alors que les boîtes 2 sont destinées à être transférées à l'entrée du module de cerclage 31 lorsqu'il s'agit d'un lot standard, en tant que lot échantillon, elles sont voués ici être transportées jusqu'à une zone de récupération 40 dédiée, conformément à la figure 3.

La figure 1 montre par ailleurs que dans cet exemple de réalisation, le module de cerclage 31 est principalement composé d'une table d'assemblage 32 sur laquelle les lots de boîtes standards sont empilés en paquets, d'une cercleuse 33 chargée de rélier ensemble les boîtes composant chaque paquet, ainsi que d'une table de réception 34 sur laquelle sont mis à disposition les paquets cerclés.

Selon une particularité de l'invention, la machine de conditionnement 1 comporte une zone de récupération 40 qui est destinée à recevoir chaque lot échantillon prélevé. Il s'agit là d'un emplacement dédié qui est distant du chemin suivant lequel transitent les boîtes 2 au sein la machine de conditionnement 1, afin de rester accessible à un opérateur ou un quelconque organe mécanisé complémentaire.

Ainsi qu'on peut le voir clairement sur la figure 3, cette zone de récupération 40 est ménagée au niveau même de la machine de conditionnement 1. Elle est en effet située au niveau des moyens de comptage et de séparation 10, en l'occurrence au dessus du module de comptage et de séparation 11. Si une telle proximité est avant tout destinée à préserver la compacité de la machine de conditionnement 1, elle permet également d'optimiser la sécurité de fonctionnement de cette dernière, par exemple en limitant l'amplitude de déplacement du bras robotisé 22 comme dans l'exemple de réalisation des figures 1 à 3.

De manière particulièrement avantageuse, la zone de récupération 40 est dotée d'un plan de réception 41 qui est incliné par rapport à l'horizontale. Cette caractéristique a pour but d'utiliser la gravité pour générer un déplacement automatique du lot échantillon 4, 5 vers la partie la plus basse de la zone de récupération 40. L'objectif final est de garantir que le lot échantillon 4, 5 soit toujours accessible au même endroit, et ce quel que soit le format ou la forme des boîtes qui le composent. Cela permet en outre de mettre l'opérateur en sécurité lorsqu'il vient retirer un échantillon, en le tenant à distance de tout organe mobile de la machine de conditionnement 1.

De préférence, l'inclinaison du plan de réception 41 est orientée côté conducteur, c'est-à-dire du côté du module de comptage et de séparation 11 où évolue habituellement le conducteur de la machine de conditionnement 1.

Conformément à une autre caractéristique avantageuse de l'invention, la zone de récupération 40 est pourvue en outre d'une butée 42 qui est à même de bloquer tout lot échantillon 4, 5 venant à glisser le long du plan de réception incliné 41, sous l'effet de la gravité. Il est entendu cependant que cette butée 42 n'est pas obligatoire et que la réception du lot échantillon 4, 5 pourrait très bien s'opérer directement par l'opérateur.

De préférence, le plan de réception 41 présente une surface favorisant le glissement par gravité du lot échantillon 4, 5 vers la butée 42. En pratique, un tel plan de réception 41 peut être constitué par exemple par un plateau à billes ou un plateau à rouleaux.

Dans ce mode particulier de réalisation, les moyens d'assemblage 20 utilisent un préhenseur à fourches 23 pour saisir chaque lot de boîtes 4, 5 à manipuler. C'est pourquoi la zone de récupération 40 est ici avantageusement pourvue d'une pluralité de broches parallèles 44, formant râtelier 43. Ces broches 44 sont conçues de façon à laisser passer les fourches 24 du préhenseur 23 lorsque ce dernier est descendu directement sur le râtelier 43 suivant un mouvement sensiblement parallèle aux broches 44. Mais l'ensemble est également agencé de manière à ce que ces broches 44 retiennent le lot d'échantillon 4, 5 lors du retrait du préhenseur 23 de la zone de récupération 40 suivant un mouvement sensiblement perpendiculaire aux broches 44.

Ainsi qu'on peut le voir clairement sur la figure 3, le râtelier 43 de cet exemple de réalisation est concrètement composé de plusieurs broches parallèles 44 qui s'étendent vers le haut de manière sensiblement perpendiculaire au plan de réception 41. L'écartement entre ces broches 44 est compatible avec celui qui sépare les fourches 24 du préhenseur 23, afin qu'il existe une certaine mobilité relative une fois ces deux types d'éléments entrecroisés.

Ainsi donc, la dépose d'un lot échantillon 4, 5 au niveau de la zone de récupération 40 peut s'opérer en descendant le préhenseur 23 directement sur le râtelier 43, c'est-à-dire en faisant passer la partie proximale des fourches 24 entre les broches 44 suivant un mouvement de translation sensiblement perpendiculaire au plan de réception 41 ; le corps du préhenseur 23 et la partie distale des fourches 24 se trouvant alors placés respectivement de part et d'autre du râtelier 43. Le retrait du préhenseur 23 s'effectue quant à lui par translation suivant une direction sensiblement perpendiculaire au râtelier 43, c'est-à-dire parallèlement au plan de réception 41. Le recul des fourches 24 par rapport aux broches 44 provoque la dépose du lot 4, 5 sur le plan de réception 41 ; lesdites broches 44 jouant alors pleinement leur rôle de moyens de retenue. Il est à noter que juste après, ces mêmes broches 44 remplissent une autre fonction, à savoir constituer un guide latéral lors du glissement du lot échantillon 4, 5 vers la butée 42.

## Revendications

1. Procédé de prélèvement d'échantillons dans une machine de conditionnement (1) d'objets plats (2), ladite machine de conditionnement (1) comprenant des moyens de comptage et de séparation (10) pour former une succession de lots (4, 5) composés chacun d'un nombre donné d'objets plats (2), ainsi que des moyens d'assemblage (20) pour former une succession de paquets constitués chacun d'un assemblage déterminé de lots (4, 5), **caractérisé en ce que** le procédé de prélèvement comporte les étapes consistant à :
- former un lot échantillon (4, 5) composé d'un nombre donné d'objets plats (2) à l'aide des moyens de comptage et de séparation (10),
- prélever le lot échantillon (4, 5) par l'intermédiaire des moyens d'assemblage (20),
- transférer le lot échantillon (4, 5) avec les moyens d'assemblage (20) jusqu'à une zone de récupération (40) dédiée de ladite machine de conditionnement (1).

2. Procédé de prélèvement selon la revendication 1, **caractérisé en ce que** la machine de conditionnement (1) étant destinée à fonctionner directement en aval de la machine (100) chargée de fabriquer les objets plats (2), le procédé de prélèvement comporte en outre les étapes consistant à :
- préalablement à l'étape de formation du lot échantillon (4,5), à réduire la vitesse de fonctionnement de la machine de fabrication (100),
- postérieurement à l'étape de prélèvement du lot échantillon (4, 5), à augmenter la vitesse de ladite machine de fabrication (100) pour revenir à sa vitesse de fonctionnement initiale.

3. Procédé de prélèvement selon l'une des revendications 1 ou 2, **caractérisé en ce qu'**il comporte en outre les étapes consistant à :
- détecter tout objet plat non-conforme (2) en amont de la machine de conditionnement (1),
- marquer chaque objet plat non-conforme (2),
- repérer chaque objet plat marqué (2) à l'entrée de la machine de conditionnement (1),
- prélever sous forme de lot échantillon (4, 5) chaque objet plat marqué (2).

4. Procédé de prélèvement selon la revendication 3, **caractérisé en ce que** l'étape de détection conduisant à détecter plusieurs objets plats non-conformes (2) consécutifs, l'étape de prélèvement consiste à prélever en une seule fois tous lesdits objets plats non-conformes (2) dans un même lot échantillon (4, 5).

5. Machine de conditionnement (1) d'objets plats (2) comprenant des moyens de comptage et de séparation (10) pour former une succession de lots (4, 5) composés chacun d'un nombre donné d'objets plats (2), ainsi que des moyens d'assemblage (20) pour former une succession de paquets constitués chacun d'un assemblage déterminé de lots (4, 5), **caractérisée en ce que** les moyens de comptage et de séparation (10) sont aptes à former un lot échantillon (4, 5) à prélever, et **en ce que** les moyens d'assemblage (20) sont aptes à prélever chaque lot échantillon (4, 5) et à le transférer jusqu'à une zone de récupération (40) dédiée de ladite machine de conditionnement (1).

6. Machine de conditionnement (1) selon la revendication 5, **caractérisée en ce que** la zone de récupération (40) est ménagée au niveau de ladite machine de conditionnement (1).

7. Machine de conditionnement (1) selon la revendication 6, **caractérisée en ce que** la zone de récupération (40) est ménagée au dessus des moyens de comptage et de séparation (10).

8. Machine de conditionnement (1) selon l'une des revendications 6 ou 7, **caractérisée en ce que** la zone de récupération (40) comporte un plan de réception (41) qui est incliné par rapport à l'horizontale.

9. Machine de conditionnement (1) selon la revendication 8, **caractérisée en ce que** l'inclinaison du plan de réception (41) est orientée vers le côté conducteur de ladite machine de conditionnement (1).

10. Machine de conditionnement (1) selon l'une des revendications 8 ou 9, **caractérisée en ce que** la zone de récupération (40) comporte une butée (42) apte à bloquer tout lot échantillon (4, 5) venant à glisser par gravité le long du plan de réception incliné (41).

11. Machine de conditionnement (1) selon l'une quelconque des revendications 8 à 10, **caractérisée en ce que** le plan de réception (41) présente une surface favorisant le glissement par gravité du lot échantillon (4, 5) vers la butée (42).

12. Machine de conditionnement (1) selon l'une quelconque des revendications 5 à 11, **caractérisée en ce que** les moyens d'assemblage (20) utilisant un préhenseur à fourches (23) pour saisir chaque lot (4, 5) d'objets plats (2) à manipuler, la zone de récupération (40) comporte une pluralité de broches sensiblement parallèles (44), formant râtelier (43), qui sont aptes d'une part à laisser passer les fourches (24) du préhenseur (23) lorsque ce dernier est descendu directement sur le râtelier (43) suivant un mouvement sensiblement parallèle aux broches (44), et d'autre part à retenir le lot d'échantillon (4, 5) lors du retrait du préhenseur (23) de la zone de récupération (40) suivant un mouvement sensiblement perpendiculaire aux broches (44).

## Patentansprüche

1. Verfahren zur Probenentnahme in einer Maschine (1) zur Verpackung flacher Gegenstände (2), wobei die Verpackungsmaschine (1) Mittel zum Zählen und zum Trennen (10), um eine Folge von Losen (4, 5) zu bilden, die jeweils aus einer gegebenen Anzahl von flachen Gegenständen (2) bestehen, sowie Mittel zum Zusammenstellen (20) umfasst, um eine Folge von Paketen zu bilden, die jeweils aus einer bestimmten Zusammenstellung von Losen (4, 5) besteht, **dadurch gekennzeichnet, dass** das Entnahmeverfahren die Schritte umfasst, die aus Folgendem bestehen:
- Bilden eines Probeloses (4, 5), das aus einer gegebenen Anzahl von flachen Gegenständen (2) besteht, mittels der Mittel zum Zählen und zum Trennen (10),
- Entnehmen des Probeloses (4, 5) über die Mittel zum Zusammenstellen (20),
- Weiterleiten des Probeloses (4, 5) mit den Mitteln zum Zusammenstellen (20) bis zu einem dedizierten Sammlungsbereich (40) der Verpackungsmaschine (1).

2. Entnahmeverfahren nach Anspruch 1, **dadurch gekennzeichnet, dass** die Verpackungsmaschine (1) dazu bestimmt ist, der Maschine (100) direkt nachgelagert betrieben zu werden, die mit der Herstellung der flachen Gegenstände (2) beauftragt ist, wobei das Entnahmeverfahren ferner die Schritte umfasst, die aus Folgendem bestehen:
- vor dem Schritt des Bildens des Probeloses (4, 5), Verringern der Betriebsgeschwindigkeit der Herstellungsmaschine (100),
- nach dem Schritt der Entnahme des Probeloses (4, 5), Erhöhen der Geschwindigkeit der Herstellungsmaschine (100), um zu ihrer Ausgangsgeschwindigkeit zurückzukehren.

3. Entnahmeverfahren nach einem der Ansprüche 1 oder 2, **dadurch gekennzeichnet, dass** es ferner die Schritte umfasst, die aus Folgendem bestehen:
- Ermitteln jedes mangelhaften flachen Gegenstandes (2) der Verpackungsmaschine (1) vorgelagert,
- Markieren jedes mangelhaften flachen Gegenstandes (2),
- Auffinden jedes markierten flachen Gegenstandes (2) am Eingang der Verpackungsmaschine (1),
- Entnehmen jedes markierten flachen Gegenstandes (2) in der Form eines Probeloses (4, 5).

4. Entnahmeverfahren nach Anspruch 3, **dadurch gekennzeichnet, dass** der Ermittlungsschritt zur Ermittlung mehrerer aufeinanderfolgender mangelhafter flacher Gegenstände (2) führt, wobei der Entnahmeschritt darin besteht, sämtliche mangelhaften flachen Gegenstände (2) in einem gleichen Probelos (4, 5) in einem einzigen Mal zu entnehmen.

5. Maschine zur Verpackung (1) flacher Gegenstände (2), die Mittel zum Zählen und zum Trennen (10) zum Bilden einer Folge von Losen (4, 5), die jeweils aus einer gegebenen Anzahl flacher Gegenstände (2) bestehen, sowie Mittel zum Zusammenstellen (20) zum Bilden einer Folge von Paketen umfasst, die jeweils aus einer bestimmten Zusammenstellung von Losen (4, 5) bestehen, **dadurch gekennzeichnet, dass** die Mittel zum Zählen und zum Trennen (10) geeignet sind, um ein zu entnehmendes Probelos (4, 5) zu bilden, und dadurch, dass die Mittel zum Zusammenstellen (20) geeignet sind, jedes Probelos (4, 5) zu entnehmen und es bis zu einem dedizierten Sammlungsbereich (40) der Verpackungsmaschine (1) weiterzuleiten.

6. Verpackungsmaschine (1) nach Anspruch 5, **dadurch gekennzeichnet, dass** der Sammlungsbereich (40) im Bereich der Verpackungsmaschine (1) eingerichtet ist.

7. Verpackungsmaschine (1) nach Anspruch 6, **dadurch gekennzeichnet, dass** der Sammlungsbereich (40) über den Mitteln zum Zählen und zum Trennen (10) eingerichtet ist.

8. Verpackungsmaschine (1) nach einem der Ansprüche 6 oder 7, **dadurch gekennzeichnet, dass** der Sammlungsbereich (40) eine Empfangsebene (41) umfasst, die in Bezug zur Horizontalen geneigt ist.

9. Verpackungsmaschine (1) nach Anspruch 8, **dadurch gekennzeichnet, dass** die Neigung der Empfangsebene (41) in Richtung der leitenden Seite der Verpackungsmaschine (1) ausgerichtet ist.

10. Verpackungsmaschine (1) nach einem der Ansprüche 8 oder 9, **dadurch gekennzeichnet, dass** der Sammlungsbereich (40) einen Anschlag (42) umfasst, der geeignet ist, jedes Probelos (4, 5) zu sperren, das durch Schwerkraft entlang der geneigten Empfangsebene (41) ins Rutschen kommt.

11. Verpackungsmaschine (1) nach einem der Ansprüche 8 bis 10, **dadurch gekennzeichnet, dass** die Empfangsebene (41) eine Fläche aufweist, die das Rutschen des Probeloses (4, 5) durch Schwerkraft in Richtung des Anschlags (42) begünstigt.

12. Verpackungsmaschine (1) nach einem der Ansprüche 5 bis 11, **dadurch gekennzeichnet, dass** die Zusammenstellungsmittel (20) einen Gabelgreifer (23) verwenden, um jedes Los (4, 5) von zu handhabenden flachen Gegenständen (2) zu ergreifen, wobei der Sammlungsbereich (40) mehrere im Wesentlichen parallele Stifte (44) umfasst, die einen Rechen (43) bilden, die geeignet sind, einerseits die Gabeln (24) des Greifers (23) durchzulassen, wenn dieser direkt auf den Rechen (43) entlang einer Bewegung im Wesentlichen parallel zu den Stiften (44) herabgelassen wird, und andererseits das Probelos (4, 5) beim Rückzug des Greifers (23) von dem Sammlungsbereich (40) entlang einer Bewegung im Wesentlichen senkrecht zu den Stiften (44) zurückzuhalten.

## Claims

1. Method for collecting samples in a machine (1) for packaging flat objects (2), the said packaging machine (1) comprising counting and separation means (10) for forming a succession of batches (4, 5), each composed of a given number of flat objects (2), as well as assembly means (20) for forming a succession of packs, each constituted by a particular assembly of batches (4, 5), **characterized in that** the method of collection includes stages consisting of:
- forming a sample batch (4, 5) composed of a given number of flat objects (2) with the help of the counting and separation means (10),
- collecting the sample batch (4, 5) by means of the assembly means (20),
- transferring the sample batch (4, 5) with the assembly means (20) to a dedicated retrieval area (40) of the said packaging machine (1).

2. Method for collecting according to Claim 1, **characterized in that**, the packaging machine (1) being intended to function directly downstream of the machine (100) for manufacturing the flat objects (2), the method for collecting includes further stages consisting of:
- before the stage for forming the sample batch (4, 5), reducing the operating speed of the manufacturing machine (100),
- after the stage for collecting the sample batch (4, 5), increasing the speed of the said manufacturing machine (100) in order to return to its initial operating speed.

3. Method for collecting according to one of Claims 1 or 2, **characterized in that** it includes further stages consisting of:
- detecting any noncompliant flat object (2) upstream of the packaging machine (1),
- marking each noncompliant flat object (2),
- identifying each noncompliant flat object (2) at the infeed to the packaging machine (1),
- collecting each marked flat object (2) in the form of a sample batch (4, 5).

4. Method for collecting according to Claim 3, **characterized in that**, the detection stage leading to the detection of a plurality of consecutive noncompliant flat objects (2), the collecting stage consists of collecting all of the said noncompliant flat objects (2) in the same sample batch (4, 5) in a single operation.

5. Packaging machine (1) for flat objects (2) comprising counting and separation means (10) for forming a succession of batches (4, 5), each composed of a given number of flat objects (2), as well as assembly means (20) for forming a succession of packs, each constituted by a particular assembly of batches (4, 5), **characterized in that** the counting and separation means (10) are capable of forming a sample batch (4, 5) to be collected, and **in that** the assembly means (20) are capable of collecting each sample batch (4, 5) and of transferring it to a dedicated retrieval area (40) of the said packaging machine (1).

6. Packaging machine (1) according to Claim 5, **characterized in that** the retrieval area (40) is arranged at the level of the said packaging machine (1).

7. Packaging machine (1) according to Claim 6, **characterized in that** the retrieval area (40) is arranged above the counting and separation means (10).

8. Packaging machine (1) according to one of Claims 6 or 7, **characterized in that** the retrieval area (40) includes a receiving plane (41) which is inclined with respect to the horizontal.

9. Packaging machine (1) according to Claim 8, **characterized in that** the inclination of the receiving plane (41) is oriented towards the operator's side of the said packaging machine (1).

10. Packaging machine (1) according to one of Claims 8 or 9, **characterized in that** the retrieval area (40) includes an abutment (42) capable of preventing any sample batch (4, 5) from sliding by gravity along the inclined receiving plane (41).

11. Packaging machine (1) according to any of Claims 8 to 10, **characterized in that** the receiving plane (41) exhibits a surface favoring the sliding by gravity of the sample batch (4, 5) towards the abutment (42).

12. Packaging machine (1) according to any of Claims 5 to 11, **characterized in that**, the assembly means (20) utilizing a fork gripper (23) in order to grasp each batch (4, 5) of flat objects (2) to be handled, the retrieval area (40) includes a plurality of substantially parallel pins (44), forming a rack (43), which are capable on the one hand of allowing the forks (24) of the gripper (23) to pass through when the latter has been lowered directly onto the rack (43) according to a movement that is substantially parallel to the pins (44), and, on the other hand, of retaining the sample batch (4, 5) during retraction of the gripper (23) from the retrieval area (40) according to a movement that is substantially perpendicular to the pins (44).
